**Europäisches Patentamt**

**European Patent Office**

**Office européen des brevets**

(19)

(11) Veröffentlichungsnummer : **0 506 169 A2**

(12) # EUROPÄISCHE PATENTANMELDUNG

(21) Anmeldenummer : **92200727.3**

(22) Anmeldetag : **07.03.92**

(51) Int. Cl.$^5$ : **G11B 15/46, G11B 15/48, G11B 15/18**

(30) Priorität : **14.03.91 DE 4108340**

(43) Veröffentlichungstag der Anmeldung :
**30.09.92 Patentblatt 92/40**

(84) Benannte Vertragsstaaten :
**PT**

(71) Anmelder : **DEUTSCHE THOMSON-BRANDT GMBH**
**Hermann-Schwer-Strasse 3**
**W-7730 Villingen-Schwenningen (DE)**

(72) Erfinder : **Macé,Philippe**
**Am Ammelbach 10**
**W-7732 Kappel (DE)**

(54) **Verfahren und Vorrichtung zum schnellen Umspulen eines Aufzeichnungsbandes.**

(57)     1. Verfahren und Vorrichtung zum schnellen Umspulen eines Aufzeichnungsbandes

2.1 Es wird ein System, bestehend aus einem Verfahren und einer zur Durchführung dieses Verfahrens geeigneten Vorrichtung, vorgestellt, das ein schnelles Umspulen eines Aufzeichnungsbandes von einer ersten Spule auf eine zweite Spule erlaubt. Dabei soll die Umspulzeit möglichst kurz sein und die mechanische Beanspruchung des Bandes sowie Schlaufenbildung vermindert werden.

2.1 Erfindungsgemäß wird eine End-Drehzahl bestimmt, ab der das Band ohne zu starke mechanische Belastung mittels einer Abbremsvorrichtung abgebremst werden kann.

Weiterhin wird eine maximale Sollverzögerung bestimmt, die üblicherweise erzielt wird durch verminderte Ansteuerung eines verwendeten Antriebsmittels (Elektromotor) ohne Verwendung der genannten Abbremsvorrichtung. Diese Sollverögerung ist so gewählt, daß eine Schlaufenbildung vermieden wird und daß ein Anliegen des Bandes an Sensoren, die besondere Marken, wie beispielsweise den Filmanfang auf einem Video-Band, erkennen.

Die abwickelnde erste Spule wird erfindungsgemäß solange beschleunigt, wie die verbleibende Umspulzeit zum Verzögern mit der Soll-Verzögerung bis zur End-Drehzahl ausreicht.

Die verbleibende Umspulzeit wird mit der benötigten Zeit verglichen durch Vergleich von Termen, in die neben der End-Drehzahl und der Soll-Verzögerung, Betriebsgrößen wie die Radien der ersten und der zweiten Spule, die dazugehörigen Drehzahlen und dergleichen eingehen.

2.3 Das erfindungsgemäße System kann bevorzugt zum Umspulen von Video-Kassetten verwendet werden.

FIG.2

EP 0 506 169 A2

Jouve, 18, rue Saint-Denis, 75001 PARIS

Die Erfindung betrifft ein Verfahren nach dem Oberbegriff des Anspruchs 1 sowie eine zur Durchführung des erfindungsgemäßen Verfahrens geeignete Vorrichtung nach dem Oberbegriff des ersten Sachanspruchs.

Bei der Aufzeichnung von Informationen, wie beispielsweise digitale Daten für Datenverarbeitungsanlagen oder digitale oder analoge Daten für Ton- oder Bildwiedergabegeräte, können Aufzeichnungsbänder verwendet werden, die die Informationen speichern. Dieses kann durch magnetische, optische oder sonstige dem Fachmann bekannte Verfahren erfolgen.

Bei der Benutzung der genannten Aufzeichnungsbänder werden diese üblicherweise mit verschiedenen Geschwindigkeiten vor- bzw. zurückgespult. Dabei wird oft unterschieden zwischen einerseits den Geschwindigkeiten, bei denen die Informationen von dem Aufzeichnungsband gelesen werden. Dieses sind die sogenannte Abspielgeschwindigkeit und der sogenannte Suchlauf.

Andererseits wird das Abspielband bei geeigneter Gelegenheit schnell vor- oder zurückgespult. Wird dabei bis an das jeweilige Ende gespult, so wird es hier als schnelles Umspulen-bezeichnet.

Im weiteren wird die Erfindung anhand von dem schnellen Umspulen einer Video-Kassette beschrieben. Es soll jedoch darauf hingewiesen werden, daß die Erfindung nicht darauf beschränkt ist.

üblicherweise weist das Magnetband einer Video-Kassette einige Zentimeter vor seinen beiden Enden jeweils eine Bandende-Markierung auf, die als transparentes Band ausgebildet ist. Diese Markierung wird von einem verwendeten Video-Rekorder erkannt, der daraufhin eine erste Spule, von der das Aufzeichnungsband abgespult wird, sowie eine zweite Spule, auf die das Aufzeichnungsband aufgespult wird, mittels einer Bremsvorrichtung abbremst.

Da dieses Abbremsen nur mit einer vorgegeben Maximal-Abbremsung erfolgt, kann es vorkommen, daß das Band mit einer unzulässig hohen Geschwindigkeit an den Anschlag kommt. Das kann zu einem Bandriß führen. Erfolgt hingegen das Abbremsen mit einer stärkeren Abbremsung, können Bandschlaufen auftreten.

Bekannte Ausführungsformen beschränken die Umspulgeschwindigkeit oder genauer gesagt die Drehzahl der abzuspulenden ersten Spule, auf eine Maximalgeschwindigkeit, deren Wert so hoch liegt, daß die Verzögerung durch den Abbremsvorgang ausreicht, zu vermeiden, daß das Band an den Anschlag kommt.

Durch die Begrenzung der Umspulgeschwindigkeit auf diese Maximalgeschwindigkeit dauert das Umspulen jedoch recht lange.

Es ist die Aufgabe der vorliegenden Erfindung, ein Umspulen eines Aufzeichnungsbandes zu realisieren, bei dem einerseits die dafür benötigte Zeit, die sogenannte Umspulzeit, verringert und andererseits verhindert wird, daß das umzuspulende Aufzeichnungsband mit einer unzulässig hohen Geschwindigkeiten an den Anschlag kommt.

Diese Aufgabe wird bei dem gattungsgemäßen System, bestehend aus dem erfindungsgemäßen Verfahren und einer zur Durchführung des erfindunssgemäßen Verfahrens geeigneten Vorrichtung durch die Kennzeichen des Anspruchs 1 bzw. durch die Kennzeichen des ersten Sachanspruchs gelöst.

Erfindungsgemäß wird zunächst ein Sollwert für eine End-Drehzahl bestimmt, die die erste Spule, d.h. die Spule von der das Aufzeichnungsband abgewickelt wird, vor ihrem Abbremsen durch eine Bremsvorrichtung, die gesteuert wird durch eine Bandende-Markierung, aufweisen soll. Diese Bestimmung kann beispielsweise erfolgen in Abhängigkeit von der Abbremswirkung der Bremsvorrichtung, sowie von dem Abstand, den die Bandende-Markierung von dem tatsächlichen Bandende aufweist.

Weiterhin wird ein Sollwert für die Verzögerung bestimmt, mit der eine Drehzahl der ersten Spule auf die End-Drehzahl verzögert wird. Dieses kann beispielsweise dadurch erfolgen, daß die Kraft, mit der die zweite Spule angetrieben wird, also diejenige, auf die das Aufzeichnungsband gewickelt wird, reduziert wird. Das kann unter Berücksichtigung auf die Gesamtmasse des Aufzeichnungsbandes, der Spulen, sowie weiterer Umstände erfolgen.

Um nun die Umspulzeit möglichst kurz zu halten, wird die zweite Spule durch einen Antriebsmotor auf eine maximale Drehzahl beschleunigt und üblicherweise, durch die Eigenschaften des Antriebsmotors bedingt, anschließend auf dieser Drehzahl gehalten. Die Drehzahl der ersten Spule wird ständig erhöht was unter anderem dadurch verursacht wird, daß der Umfang des aufspulenden Aufzeichnugsbandes ständig zunimmt, der des abzuspulenden Bandes jedoch ständig abnimmt.

Um zu verhindern, daß das Aufzeichnugsband mit unzulässig hoher Geschwindigkeit an den Anschlag gerät, wird die Drehzahl ($W1$) der ersten Spule auf eine Maximal-Drehzahl ($Wm$) solange erhöht, wie die verbleibende Umspulzeit ausreicht, um gemäß einen vorgegebenen Sollwert für die Verzögerung ($al$) die Drehzahl der ersten Spule auf eine vorgegebene End-Drehzahl ($Wo$) zu verzögern.

Es sind Vorteile des erfindungsgemäßen Systems, daß durch das rechtzeitige Einleiten der Verzöserung einerseits die mechanische Beanspruchung des verwendeten Aufzeichnungsbandes vermindert und andererseits der Bedienungskomfort erhöht wird.

Wird die Umspulzeit bestimmt aus der aktuellen Anzahl von Windungen, die sich auf der ersten Spule befinden, hat das insbesondere den Vorteil, daß das erfindungsgemäße System auch dann zufriedenstelled funktioniert, wenn Aufzeichnungsbänder mit unterschiedlichen Bandlängen verwendet werden oder wenn das Umspulen dann gestartet wird, wenn bereits ein Teil des Bandes umgespult wurde.

Die Anzahl der aktuellen Windungen kann ermittelt werden aus der Dicke des Aufzeichnungsbandes, gegebenenfalls aus dem Radius eines Kerns, auf den das Aufzeichnungsband aufgewickelt ist und aus der Dicke des gesamten auf der ersten Spule befindlichen Aufzeichnungsbandes. Dadurch wird ein einfaches System zur Bestimmung der Anzahl der aktuellen Windungen ermöglicht.

Bei Verwendung vorhandener Sensoren und unter Berücksichtigung der in den Ansprüchen weiterhin angegeben Verfahrensschritten werden einfache und preiswerte Systeme realisiert.

Weitere Merkmale, Vorteile und Einzelheiten der Erfindung werden in den folgenden Ausführungsbeispielen anhand der Zeichnung erläutert. Dabei zeigen:

Fig. 1: ein Ausführungsbeispiel der erfindungsgemäßen Vorrichtung;

Fig. 2: das Flußdiagramm eines ersten Ausführungsbeispiels des erfindungsgemäßen Verfahrens;

Fig. 3: das zeitliche Verhalten der Umspulgeschwindigkeit gemäß der Erfindung;

Bevor auf die Beschreibung der Ausführungsbeispiele näher eingegangen wird, sei darauf hingewiesem, daß die in den Figuren einzeln dargestellten Blöcke lediglich zum besseren Verstöndnis der Erfindung dienen. üblicherweise sind einzelne oder mehrere dieser Blöcke zu Einheiten zusammengefaßt. Diese können in integrierter oder Hybridtechnik oder als programmgesteuerter Mikrorechner, bzw. als Teil zu seiner Steuerung geeigneten Programmes realisiert sein.

Es versteht sich, daß die in den einzelnen Stufen Elemente auch getrennt ausgeführt werden können.

Im folgenden werden Mittel und Signalverläufe mit gleichen Bedeutungen in den Figuren jeweils mit denselben Bezugzeichen versehen.

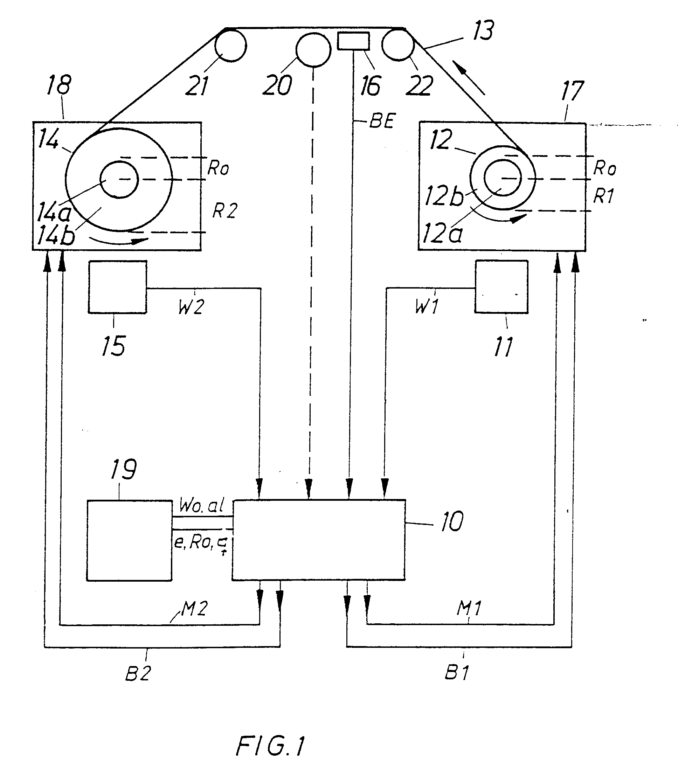

Fig. 1 zeigt symbolisch ein Ausführungsbeispiel der erfindungsgemäßen Vorrichtung. Dabei handelt es sich ausschnittsweise um Elemente eines Video-Rekorders bzw. -Abspielgerätes, bei dem eine entsprechende Kassette umgespult wird. Es sind lediglich solche Mittel dargestellt, die für das Verständnis der Erfindung wesentlich sind.

Ein elektronisches Steuergerät 10 empfängt von einem ersten Drehzahlsensor 11 Signale, die ein Maß darstellen Tür die Drehzahl W1 einer ersten Spule 12, von der ein Aufzeichnungsband 13 auf eine zweite Spule 14 gespult wird.

Die erste Spule 12 wird gebildet aus einem ersten Kern 12a mit dem Radius Ro und einer Restmenge 12b, die N1 Windungen des Abspielbandes 13 enthält, das eine Dicke e aufweist, wodurch sich die Gesamtdicke D1 der Restmenge 12b ergibt zu

$$D1 = M1 * e.$$

Der erste Gesamtradius R1 ergibt sich somit aus

$$R1 = Ro + D1.$$

Die zweite Spule 14 wird analog zu der ersten Spule 12 gebildet aus einem zweiten Kern 14a, der in diesem Ausführungsbeispiel den gleichen Radius Ro aufweist wie der erste Kern 12a, und einer Aufspul-Menge 14b mit N2 Windungen, die die Dicke D2 aufweist:

$$D2 = N2 * e.$$

Daraus ergibt sich der zweite Gesamtradius R2

$$R2 = Ro + D2.$$

Die Drehzahl W2 der zweiten Spule 14 wird durch einen zweiten Drehzahlsensor 15 erfaßt, der entsprechende Signale an das elektronische Steuergerät 10 abgibt.

Die Drehzahlsensoren 11 bzw. 15 sind vorzugsweise dergestalt, daß digitale Markierungen, die auf einem nicht dargestellten Rotor aufgebracht sind, erfaßt werden und dadurch auf die Drehzahl geschlossen wird. Die Drehzahl eines dieser Rotoren ist mit der Drehzahl der dazugehörigen Spule 12 bzw. 14, gekoppelt, wodurch sich Zeiträume zwischen den einzelnen Markierungen ergeben, die umgekehrt proportional zu der betrachteten Spulen-Drehzahl sind.

Das elektronische Steuergerät 10 empfängt weiterhin Signale BE von einem Bandende-Sensor 16, der eine Bandende-Markierung des Aufzeichnungsbandes 13 erkennt. Diese kann elektrisch, optisch, magnetisch oder dergleichen sein und der Bandende-Sensor 16 ist dementsprechend ausgebildet.

Die erste Spule 12 ist mit einer ersten Drehvorrichtung 17 verbunden, die nicht dargestellte erste Antriebsmittel, wie beispielsweise einen Elektromotor einschließlich der dazugehörigen Ansteuervorrichtung, sowie nicht dargestellte erste Abbremsmittel enthält. Das elektronische Steuergerät 10 gibt Signale M1, die die genannten ersten Antriebsmittel ansteuern, und Signale B1, die die genannten ersten Bremsmittel ansteuern, an die erste Drehvorrichtung ab.

Eine zweite Drehvorrichtung 18 ist in Analogie zu der ersten Drehvorrichtung 17 mit einem nicht dargestellten zweiten Antriebsmittel und einem nicht dargestellten zweiten Abbremsmittel versehen. Diese enthalten von dem elektronischen Steuergerät 10 entsprechende Ansteuersignale M2 bzw, B2.

3

Anstelle zweier Antriebsmittel, die in den Drehvorrichtungen 17 bzw. 18 enthalten sind, kann ein einziges Antriebsmittel verwendet werden, dessen Antriebswirkung über geeignete Umlenkmittel zu der jeweils anzutreibenden Spule 12 bzw. 14 gelenkt wird.

Das erste Antriebsmittel, bzw. die genannte Umlenkung der Antriebswirkung auf die erste Spule 12, ist zum Umspulen nur dann notwendig, wenn es auch in die zweite Richtung, also von der zweiten Spule 14 auf die erste Spule 12 erfolgen soll. Ein derartiger Umspulvorgang verläuft analog wie der hier näher beschriebene.

Weiterhin ist ein Speicher 19 vorgesehen, in dem ein Sollwert bezüglich einer maximalen Abbremsdrehzahl Wo, ein Wert bezüglich einer maximalen Verzögerung al, Werte e für die Dicke des Abspielbandes 13 und Werte für der Radius Ro der Kerne 12a bzw. 14a abgespeichert sind und der entsprechende Signale an das elektronische Steuergerät 10 abgibt. Weiterhin ist ein Flächenwert q abgespeichert, der weiter unten definiert wird.

Zusätzlich kann noch ein Lesekopf 20 vorgesehen sein, der zusätzliche Markierungen, die dem Aufzeichnungsband 13 aufgeprägt sind, erkennt. Dadurch können entsprechende Signale, wie beispielsweise eine "Filmanfang"-Erkennung an das elektronische Steuergerät 13 abgegeben werden, welches daraufhin ein Anhalten während des Umspulens veranlaßt.

Zwei Umlenkspulen 21 und 22 dienen zur geeigneten Führung des Aufzeichnungsbandes 13.

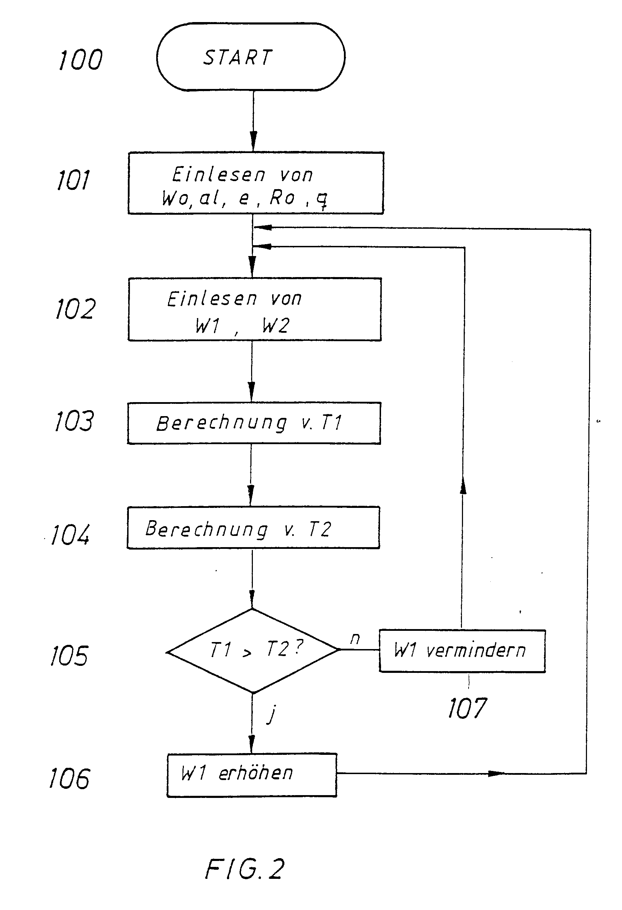

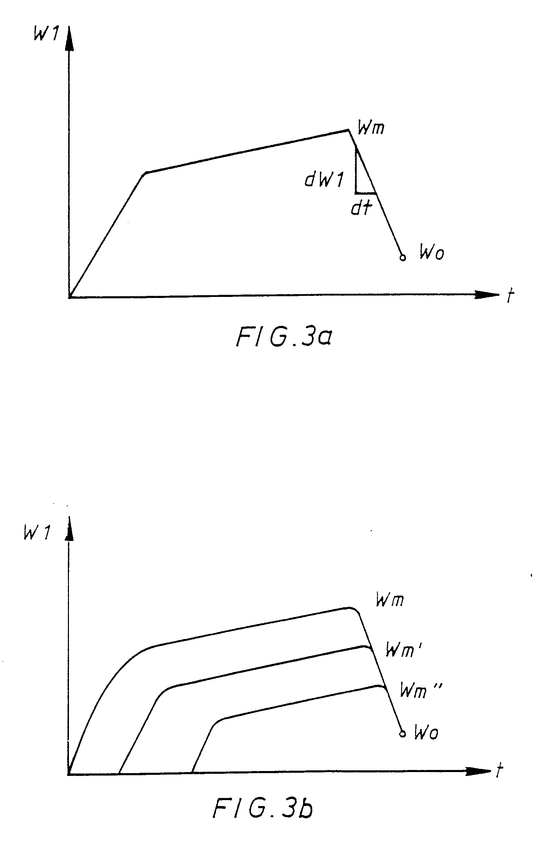

Das erfindungsgemäße Verfahren wird nun mit Hilfe des Flußdiagramms der Fig. 2 sowie dem Diagramm der Fig. 3 erläutert.

Nachdem ein Umspulvorgang in Schritt 100 gestartet wurde, liest das elektronische Steuergerät 10 in Schritt 101 folgende Werte aus dem Speicher 19 ein:

- den Sollwert für die Abbremsdrehzahl Wo, die die erste Spule vor ihrem Abbremsen durch die Abbremsvorrichtung aufweisen soll,
- den Maximalwert für die Verzögerung al,
- einen Wert für die Banddicke e,
- den Flächenwert q, der abhängt von der Gesamt-Fläche A des umzuspulenden und des aufgespulten Bandes 13 sowie der Fläche der Kerne 12a, 14a, also

$$q^2 = k * (R1^2 + R2^2),$$

- den Wert Ro.

Gemäß einer ersten Version dieses Ausführungsbeispiels sind die genannten im Speicher 19 abgespeicherten Werte werksseitig bestimmt worden und entsprechen Mittelwerten bzw. kritischen Extremwerten, die sich bei der Verwendung üblicher Video-Kassetten ergeben.

Bei weiteren Versionen können diese Werte aufgrund einer Banderkennung durch das verwendete Abspielgerät bestimmt werden.

In Schritt 102 werden die Werte W1 und W2 von den Drehzahl-Sensoren 11 bzw. 15 eingelesen.

Aus den eingelesenen Größen wird in Schritt 103 ein erster Term T1 berechnet

$$(2 * al)/e * (R1 - Ro) \quad (1)$$

In Schritt 104 wird ein zweiter Term bestimmt aus:

$$W1^2 - Wo^2 \quad (2)$$

Der Term (1) ist eine Umrechnung des Ausdrucks

$$4 * \pi * al * N1. \quad (3)$$

Der Ausdruck (3) ergibt sich aus folgenden Grundgleichungen:

$$dN1/dt = W1/(2 * \pi), \quad (a)$$

welche den Zusammenhang zwischen der zeitlichen Änderung der Anzahl N1 der Windungen auf der ersten Spule 12 und deren Drehzahl W1 angibt.

Als weitere Grundgleichung geht in den Ausdruck (3) ein:

$$dW1/dt = - al, \quad (b)$$

die den Zusammenhang der zeitlichen Änderung der Drehzahl W1 und dem Sollwert der Verzögerung al angibt.

Der Ausdruch (1) führt unter Einführung der Abkürzung

$$p = R1/R2 \quad (c)$$

und unter Berücksichtigung von

$$R1 = p * q / (1 + p^2)^{1/2} \quad (d)$$

zu

$$2*al/e * (p*q/(1 + p^2)^{1/2} - Ro). \quad (4)$$

Somit stellt der erste Term T1 in Form von (1) bzw. (4) unter Berücksichtigung der bereits genannten Definitionen der einzelnen Größen einen Wert dar für die Umspulzeit, die benötigt wird, um die Drehzahl der ersten Spule 12 mit der Verzögerung al auf die vorgegebene End-Drehzahl Wo zu verzögern.

In Schritt 105 wird überprüft, ob der erste Term T1 größer ist als der zweite Term T2. Wenn "ja", folgt Schritt 106, wo die Drehzahl W1 der ersten Spule 12 weiter erhöht wird. Im Anschluß daran führt das Verfahren zu Schritt 102, so daß die Schritte 102 bis 105 erneut durchlaufen werden.

Wird in Schritt 105 festgestellt, daß der erste Term T1 nicht größer als der zweite Term T2 ist, so folgt ein Schritt 107, in dem die Drehzahl W1 der ersten Spule 12 entsprechend dem Sollwert der Verzögerung al vermindert wird.

Die Wirkung des erfindungsgemäßen Verfahrens ist aus Fig. 3, bestehend aus Fig. 3a und Fig. 3b, ersichtlich. Die Drehzahl W1 der ersten Spule 12 steigt zunächst bis auf einen Maximalwert Wm an und wird anschließend auf den Wert der vorgegebenen Enddrehzahl Wo mit der Soll-Verzögerung al verzögert.

Fig. 3b zeigt verschiedene Verläufe der Drehzahl W1. Diese können beispielsweise durch verschiedene Startpunkte für das Umspulen verursacht werden.

Es ist ersichtlich, daß die Soll-Verzögerung al und die End-Drehzahl Wo immer gleich groß sind. Die Werte der Maximal-Drehzahl Wm sind jedoch verschieden.

Bei einem zweiten Ausführungsbeispiel werden der erste und der zweite Term derart umgeformt, daß eine Berechnung und der anschließende Vergleich möglichst schnell durch das elektronische Steuergerät 10 durchgeführt werden kann.

Da

$$p \ = \ R1/R2 \quad (c)$$

gegen Ende des Umspulvorganges sehr viel kleiner als 1 wird, folgt aus (d) näherungsweise

$$R1 \ = \ q*p, \quad (e)$$

wodurch sich aus (4) und (2) als neuer erster Term T1′ ergibt

$$dT^2(2*al/e*(q*p - Ro) \ + \ 1/dTo^2) \quad (5)$$

Dabei ist T = 1/W1 und To = 1/Wo.

Der neue erste Term T1′ nach (5) wird nun überprüft, ob er größer oder kleiner als der neue zweite Term T2′ ist, der konstant den Wert "1" aufweist.

Das entsprechende Verfahren läuft analog zu dem Flußdiagramm der Fig. 2 ab, jedoch ist statt "T1" "T1′" und statt "T2" "T2′" einzusetzen.

Eine weitere Rechenbeschleunigung ergibt sich bei einem weiteren Ausführungsbeispiel.

Das zweite Antriebsmitlel, das in der zweiten Drehvorrichtung 18 enthalten ist, ist starr mit einem nicht dargestellten Rotor verbunden, der digitale Markierungen, welche optische, magnetische oder sonstige Eigenschaften aufweisen, enthält, die durch einen geeigneten Sensor erfaßt werden.

Die Anzahl der Markierungen, die innerhalb einer Umdrehung der ersten Spule 12 erfaßt werden, führen zu dem Signal FG1 und die Anzahl der Markierungen, die innerhalb einer Umdrehung W2 der zweiten Spule 14 erfaßt werden, führen zu einem Signal FG2.

Da die zweite Spule 14 üblicherweise mit der maximalen Drehzahl des zweiten Antriebsmittels angetrieben wird, ist die Drehzahl der Spule 14 und damit auch FG2 konstant.

Die Drehzahl der ersten Spule 12 hingegen vergrößert sich mit abnehmendem ersten Radius R1. Dabei gilt

$$R1/R2 \ = \ FG1/FG2 \ = \ p \quad (c′)$$

Die Berechnung des neuen ersten Terms gemäß (5) kann beschleunigt werden, wenn Konstanten zusammengefaßt werden, wie beispielsweise

$$dT^2 * ( K1 \ FG1 * K2) \quad (5a)$$

mit

$$K1 \ = \ 2*al * q/(e * FG2);$$
$$K2 \ = \ 1/dTo^2 - 2 * al * q * Ro/(e * FG2).$$

Zusätzlich können weitere übliche Näherungen in dem Term (5) bzw. (5a) durchgeführt werden.

Eine Version für beide genannten Ausführungsbeispiele berücksichtigt den Fall, daß ein Aufzeichrugsband 13 verwendet wird, dessen charakteristische Größen wie Dicke e, Kernradius Ro, Flächenwert q, usw. von den als Mittelwert in Speicher 19 abgespeicherten Werten stark abweichen.

Dann kann es vorkommen, daß der neue erste Term (5), (5a) negativ wird. Da die Berechnungen üblicherweise digital durchgeführt werden, ergibt sich unter Umständen, daß ein Komplementärwert gebildet wird, der als hoher positiver Wert gedeutet wird, so daß die Abfrage in Schritt 105 "ja" ergibt und während der Verzögerungsphase erneut beschleunigt wird.

Dieses wird dadurch vermieden, daß bei Einleiten der Verzögerungsphase, das heißt nach überschreiten der Maximalgeschwindigkeit Wm, ein Flag gesetzt wird, das ein anschließendes Beschleunigen verhindert.

Denkbar ist auch, daß abgefragt wird, ob der Wert des betrachteten Terms sich stetig ändert.

Wird der betrachtete Term negativ, so erfolgt der Umspulvorgang mit konstanter Geschwindigkeit Wo.

Weitere Versionen der vorgestellten Ausführungsbeispiele können mindestens eine der folgenden Varianten enthalten:

– zur Entscheidung, ob Beschleunigt oder verzögert wird, dienen statt einzelner Werte eine Vielzahl von Werten, aus denen jeweils ein entsprechender Mittelwert gebildet wird;

– bei der Abfrage in Schritt 105 kann eine Hysterese vorgesehen sein, wodurch starke Regelschwingungen vermieden werden;

– die Radien R1, R2 können durch nicht dargestellte Sensoren bestimmt werden. So können die Dicken D1, D2 durch Messungen optischer Größen, wie beispielsweise der Entfernung der äußenen Windung zu einem Bezugspunkt, oder durch Messungen magnetischer Größen oder sonstiger dem Fachmann bekannter Verfahren R1 und R2 bestimmt werden;

– bei der Verzöserungsphase von Wm auf Wo wird der D-Anteil eines für die Ansteuerung des Elektromotors verwendeten PID-Reglers derart verändert, daß ein überschwingen weitgehend reduziert wird.

Somit wird ein System, bestehend aus einem Verfahren und einer zur Durchführung dieses Verfahrens geeigneten Vorrichtung vorgestellt, das ein schnelles Umspulen eines Aufzeichnungsbandes von einer ersten Spule auf eine zweite Spule erlaubt.

Erfindungsgemäß wird eine End-Drehzahl bestimmt, ab der das Band ohne zu starke mechanische Belastung mittels einer Abbremsvorrichtung abgebremst werden kann.

Weiterhin wird eine maximale Sollverzögerung bestimmt, die üblicherweise erzielt wird durch verminderte Ansteuerung eines verwendeten Antriebsmittels (Elektromotor) ohne Verwendung der genannten Abbremsvorrichtung. Diese Sollverögerung ist so gewählt, daß eine Schlaufenbildung vermieden wird und daß ein Anliegen des Bandes an Sensoren, die besondere Marken, wie beispielsweise den Filmanfang auf einem Video-Band, erkennen.

Die abwickelnde erste Spule wird erfindungsgemäß solange beschleunigt, wie die verbleibende Umspulzeit zum Verzögern mit der Soll-Verzögerung bis zur End-Drehzahl ausreicht.

Die verbleibende Umspulzeit wird mit der benötigten Zeit verglichen durch Vergleich von Termen, in die neben der End-Drehzahl und der Soll-Verzögerung, Betriebsgrößen wie die Radien der ersten und der zweiten Spule, die dazugehörigen Drehzahlen und dergleichen eingehen.

Weiterhin werden auch Größen berücksichtigt, die von der Art des verwandeten Aufzeichnugsbandes abhängen. Diese Größen können entweder als Mittelwerte in einen Speicher abgespeichert und bei der Berechnung berücksichtigt werden.

Oder aber die Art des verwendeten Aufzeichnugsbandes wird durch eine Band-Erkennungs-Einrichtung erkannt. Daraufhin können charakteristische Werte verwendet werden, die zuvor in einer Tabelle abgelegt wurden, oder aber die entsprechenden Werte berechnet werden.

Durch das erfindungsgemäße System wird die benötigte Umspulzeit gegenüber bekannten System stark verringert (ca. 100 Sekunden für ein 180-Minuten Videoband). Weiterhin wird eine starke mechanische Belastung des Aufzeichnugsbandes vermieden und ein ständiger Kontakt zu einem Lesekopf erzielt.

Es sei ergär.zend erwähnt, daß bei Verwendung von großen Kernen 12a, 14a, in der Näherung für Gleichung (d) p im Nenner zu "1" gesetzt wird.

**Patentansprüche**

1. Verfahren zum schnellen Umspulen eines Aufzeichnungsbandes von einer ersten Spule auf eine zweite Spule, dadurch gekennzeichnet, daß die Drehzahl (W1) der ersten Spule auf eine Maximal-Drehzahl (Wm) solange erhöht wird, wie die verbleibende Umspulzeit ausreicht,um gemäß einem vorgegebenen Sollwert für die Verzögerung (al) die Drehzahl (W1) der ersten Spule auf eine vorgegebene End-Drehzahl (Wo) zu verzögern.

2. Verfahren nach Anspruch 1, dadurch gekennzeichnet, daß ein Wert, der ein Maß darstellt für die verbleibende Umspulzeit bestimmt wird aus der aktuellen Anzahl von Windungen des Aufzeichnungsbandes, die sich auf der ersten Spule befinden.

3. Verfahren nach Anspruch 2, dadurch gekennzeichnet, daß die Anzahl der aktuellen Windungen ermittelt wird aus der Dicke (e) des Aufzeichnungsbandes, aus dem Radius (Ro) eines Kerns der ersten Spule, auf den das Aufzeichnungsband aufgespult ist, und aus der Dicke (D) des gesamten auf der ersten Spule befindlichen Aufzeichnungsbandes.

4. Verfahren nach einem der Ansprüche 1 bis 3, dadurch gekennzeichnet, daß die Anzahl von Umdrehungen eines Rotors, der sich mit einer an die Drehzahl (W2) der zweiten Spule gekoppelten Geschwindigkeit dreht, erfaßt wird und daß die verbleibende Umspulzeit berechnet wird aus einem ersten und einem zweiten Wert, die bestimmt werden aus der Anzahl von Umdrehungen des genannten Rotors während der Zeiträume, in der die erste Spule bzw. die zweite Spule eine Umdrehung zurücklegt.

5. Vorrichtung zum schnellen Umspulen eines Aufzeichnungsbandes (13) von einer ersten Spule (12) auf eine zweite Spule (14), dadurch gekennzeichnet, daß Mittel (19) vorgesehen sind, die Betriebswerte von Sensoren (11, 15, 16) empfangen, vorgegebene Werte (Wo, al, Ro, e, q) aus einem Speicher (19) auslesen, und aufgrund von Berechnungen und Vergleichen zweite Antriebsmittel derartig ansteuern, daß die Drehzahl (W1) der ersten Spule (12) auf eine Maximal-Drehzahl (Wm) solange erhöht wird, wie die verbleibende Umspulzeit ausreicht, um gemäß einem vorgegebenen Sollwert für die Verzögerung (al) die Drehzahl (W1) der ersten Spule (12) auf eine vorgegebene End-Drehzahl (Wo) zu verzögern.

6. Vorrichtung nach Anspruch 5, dadurch gekennzeichnet, daß die Mittel (10) die Anzahl der aktuellen Windungen ermitteln aus dem Wert der Dicke (e) des Aufzeichnugsbandes, aus dem Wert des Radius (Ro) eines Kerns der ersten Spule, auf den das Aufzeichnungsband aufgespult ist, und aus dem Wert der Dicke (D) des gesamten auf der ersten Spule befindlichen Aufzeichnungsbandes.

7. Vorrichtung nach einem der Ansprüche 5 oder 6, dadurch gekennzeichnet, daß ein Sensor vorgesehen ist, der die Anzahl von Umdrehungen eines Rotors, der sich mit einer an die Drehzahl (W2) der zweiten Spule gekoppelten Geschwindigkeit dreht, erfaßt und ein entsprechendes Signal an das Mittel (10) abgibt, das die verbleibende Umspulzeit berechnet aus einem ersten Wert (FG1) und einem zweiten Wert (FG2), die bestimmt werden aus der Anzahl von Umdrehungen des genannten Rotors während der Zeiträume, in der die erste Spule (12) bzw. die zweite Spule (14) eine Umdrehung zurücklegt.

FIG.1

100     START

101     Einlesen von
Wo, al, e , Ro , q

102     Einlesen von
W1 , W2

103     Berechnung v. T1

104     Berechnung v. T2

105     T1 > T2?

n     W1 vermindern

107

j

106     W1 erhöhen

FIG.2

FIG.3a

FIG.3b